(19) **Europäisches Patentamt**

**European Patent Office**

**Office européen des brevets**

(11) **EP 1 161 677 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(51) Int Cl.:
***G01N 27/26*** (2006.01)

(21) Anmeldenummer: **00906131.8**

(22) Anmeldetag: **08.03.2000**

(86) Internationale Anmeldenummer:
**PCT/CH2000/000131**

(87) Internationale Veröffentlichungsnummer:
**WO 2000/055612 (21.09.2000 Gazette 2000/38)**

(54) **VERFAHREN UND VORRICHTUNG ZUR MESSUNG DER ÄNDERUNG DER SÄURE-, BZW. BASENKONZENTRATION WÄSSERIGER LÖSUNGEN**

METHOD AND DEVICE FOR MEASURING THE VARIATION IN THE ACID CONCENTRATION OR BASE CONCENTRATION OF AQUEOUS SOLUTIONS

PROCEDE ET DISPOSITIF POUR MESURER LA VARIATION DE LA TENEUR EN ACIDE OU EN BASE DE SOLUTIONS AQUEUSES

(84) Benannte Vertragsstaaten:
**AT BE CH CY DE DK ES FI FR GB GR IE IT LI LU MC NL PT SE**

(30) Priorität: **16.03.1999 CH 48399**

(43) Veröffentlichungstag der Anmeldung:
**12.12.2001 Patentblatt 2001/50**

(73) Patentinhaber:
• **DIAL ENGINEERING AG**
**CH-8181 Höri (CH)**
• **Gaskatel GmbH**
**34123 Kassel (DE)**

(72) Erfinder:
• **KOHNKE, Hans-Joachim**
**D-34123 Kassel (DE)**
• **KAMMER, Peter**
**CH-8184 Bachenbülach (CH)**
• **ROTHERT, Martin**
**D-34121 Kassel (DE)**

(74) Vertreter: **Lusuardi, Werther et al**
**Dr. Lusuardi AG,**
**Kreuzbühlstrasse 8**
**8008 Zürich (CH)**

(56) Entgegenhaltungen:
**DE-A- 3 216 412        FR-A- 1 542 798**
**US-A- 3 560 268**

**Beschreibung**

Gegenstand der vorliegenden Erfindung ist ein Verfahren zur Messung der Änderung der Säure-, bzw. Basenkonzentration wässeriger Lösungen gemäss dem Oberbegriff des Anspruchs 1, die Anwendung des Verfahrens zur Messung der Säuredichte und Anzeige des Ladezustandes von Bleiakkumulatoren gemäss Anspruch 3 sowie eine Vorrichtung zur Messung der Änderung der Säure-, bzw. Basenkonzentration wässeriger Lösungen.

Das erfindungsgemässe Verfahren eignet sich insbesondere zur elektrischen Ladekontrolle zur Batterieüberwachung von Bleiakkumulatoren, insbesondere hermetisch dichter Bleiakkumulatoren, bei denen sich die Konzentration des Elektrolyten mit dem Ladezustand ändert.

Weil sich bei den meisten Bleiakkumulatoren mit der Entladung bzw. Wiederaufladung die Konzentration des Elektrolyten ändert, kann diese technische Grösse zur Bestimmung des Ladezustandes herangezogen werden: Im aufgeladenen Zustand besteht die negative Elektrode aus metallischem Blei und die positive Elektrode aus Bleidioxid. Der Elektrolyt hat in diesem Zustand die höchste Schwefelsäurekonzentration. Wird der Bleiakkumulator entladen, so wandeln sich sowohl die negative als auch die positive Elektrode in Bleisulfat um. Die Konzentration der Schwefelsäure nimmt ab.

Es ist bekannt, dass mit Hilfe der Elektrolytkonzentration auf den Ladezustand von Bleiakkumulatoren geschlossen werden kann. Dazu werden verschiedene Methoden benutzt. Üblich ist die Probennahme des Elektrolyten und die Messung der Säuredichte ausserhalb des Bleiakkumulators mit einem Schwimmer. Auch andere physikalische Methoden zur Messung der Säuredichte sind dazu möglich - z.B. mittels Schallwellen, jedoch arbeiten alle diese Methoden diskontinuierlich. Um sie auch für eine kontinuierliche Messung zu nutzen, müsste ein unverhältnismässiger technischer Aufwand getrieben werden. So könnte zum Beispiel eine Pumpe laufend dem Bleiakkumulator die Säure entnehmen und nach Analyse die Säure wieder zurück in den Bleiakkumulator pumpen.

Eine andere Möglichkeit zur kontinuierlichen Messung der Säuredichte besteht durch den Einsatz einer aus zwei Schichten bestehenden Quellmembran. Die erste Schicht besteht aus einem Ionenaustauscher, der zur Wasseraufnahme neigt und sich damit ausdehnt, während die andere Schicht kein Wasser aufnimmt und daher dimensionsstabil bleibt. Eine solche Quellmembran verhält sich in verschiedenen konzentrierten Flüssigkeiten wie ein Bimetallstreifen bei verschiedenen Temperaturen: Die Quellmembran krümmt sich in Abhängigkeit von der Wasserkonzentration der zu messenden Lösung. Dieses Verfahren könnte auch in Bleiakkumulatoren genutzt werden. Nachteilig bei diesem System ist allerdings, dass nicht in dem gesamten Bleiakkumulator gemessen werden kann. Weil der Krümmungsradius solcher Quellmembranen sehr klein ist, würde sich diese Membran bei 1 Meter Länge mehrmals um sich selbst drehen. Dadurch könnten immer nur kleine Teile eines Bleiakkumulators - insbesondere die oberen Bereiche - untersucht werden. Besonders nachteilig ist dieser Umstand, wenn die sogenannte Elektrolytschichtung auftritt. Hierbei sammelt sich aufgrund der wirkenden Schwerkraft die Säure mit der höheren Dichte am Boden des Bleiakkumulators, wohingegen die Säure mit der geringeren Dichte weiter oben in dem Bleiakkumulator zu finden ist. Durch die Messung an nur einem Ort - insbesondere nur im oberen Bereich des Bleiakkumulators - ergibt sich somit ein falscher Schluss auf den Ladezustand des gesamten Bleiakkumulators. Weiterhin kann mit einer solchen Sonde nicht in festgelegten Elektrolyten gemessen werden, bei denen das Vlies oder das Gel die mechanische Bewegung der Quellmembran behindert.

Aus der FR 1.542,798 ist bereits eine gattungsgemässe Vorrichtung bekannt, bei welcher ein quellfähiger Körper dazu benutzt wird durch sein Aufquellen einen Mikroschalter zu betätigen. Damit ist aber lediglich die Konzentrations-Messung des Elektrolyten möglich. Bei einer speziellen Ausführungsform wird zwar auch eine Regelung der Elektrolyt-Konzentration offenbart, allerdings auf rein pneumatischer Basis, ohne Verwendung elektrischer Signale.

Hier will die Erfindung Abhilfe schaffen. Der Erfindung liegt das Problem zugrunde, ein Verfahren zu schaffen, welches die kontinuierliche Messung der Änderung der Säure-, bzw. Basenkonzentration wässeriger Lösungen gestattet.

Die Erfindung löst die gestellte Aufgabe mit einem Verfahren, welches die Merkmale des Anspruchs 1 aufweist, einer Anwendung, welche die Merkmale des Anspruchs 3 aufweist sowie einer Vorrichtung, welche die Merkmale des Anspruchs 4 aufweist.

Bei einer bevorzugten Ausführungsform erfolgt die Lösung dieser Aufgabe durch die Benutzung eines Fadens oder Stabes aus Ionenaustauschermaterial. Ein Ionenaustauscher besteht aus anorganischen oder organischen Feststoffen, welche bewegliche Ionen enthalten und die Fähigkeit haben, diese gegen andere Ionen mit gleichem Ladungsvorzeichen auszutauschen.

Als Ionenaustauschermaterial für die erfindungsgemässe Vorrichtung eignen sich insbesondere solche, welche als funktionelle Gruppe eine ähnliches Ion aufweisen, wie die zu messende Flüssigkeit. Zur Messung von Schwefelsäure bietet sich somit ein Sulfonsäurerest an. Analog dazu müssen die funktionellen Gruppen bei anderen zu messenden Lösungen - wie z.B. bei Laugen oder Nitraten - gewählt werden. Als Ionenaustauscher wird für die Laugenmessung vorzugsweise ein tertiäres Amin (z.B. Lewatit von Bayer) eingesetzt.

Der Ionenaustauscher wird in einem dimensionsstabilen Rohr an dessen unterem Ende fixiert. Am oberen Ende ist der Ionenaustauscher über eine Federkraft eingespannt. Die Länge des Ionenaustauschers und somit die mögliche Messlänge in dem Bleiakkumulator spielt keine Rolle. Durch Variation der Federstärke oder des Federweges können auch ein Meter lange Ionenaustauscher eingespannt werden. In Anwesenheit einer wässerigen Lösung erfährt der Ionenaustauscher eine Ausdehnung, die durch Änderung der Federkraft gemessen werden kann. Ein elektrisches Messgerät gibt ein analoges Ausgangssignal, welches - bei einer bevorzugten Ausführungsform mit dem analogen Ausgangssignal eines Temperaturfühlers verarbeitet wird. So ergibt sich ein temperaturkompensiertes Messgerät zur kontinuierlichen Bestimmung der Schwefelsäure-Konzentration ohne Einfluss einer möglichen Schichtung innerhalb des Elektrolyten. Wird dieses Messgerät mit einem Batteriemanagementgerät, welches die Strom- und Spannungscharakteristika (Stromstärke, Spannung, Temperatur und Zeit) des Bleiakkumulators protokolliert, verschaltet, so kann in jedem Zeitpunkt die aktuelle Kapazität des Bleiakkumulators errechnet werden. Die mathematische Formulierung findet man in der Patentschrift DE 32 16 412. Die verfügbare Restladung berechnet sich nach:

$$ K_R = K_N - K_C - \alpha(K_C - K_D) $$

Dabei ist $K_N$ die ursprünglich vorhandene Nutzkapazität, $K_C$ die elektrocoulometrisch ermittelte Ladungsentnahme, $K_D$ die Kapazität errechnet aus der Säuredichte und $\alpha$ eine konstruktionsbedingte Proportionalitätskonstante ist, deren Wert Zwischen 1 und 2, vorzugsweise Zwischen 1 und 1,2 liegt.

Aufgrund der kontinuierlichen Säuremessung und dem elektrischen Ausgangssignal eignet sich die erfindungsgemässe Vorrichtung insbesondere zur Überwachung des Ladezustandes von Bleiakkumulatoren.

Es zeigen

Fig. 1 einen Längsschnitt durch eine Ausführungsform der erfindungsgemässen Vorrichtung;

Fig. 2 einen Längsschnitt durch eine weitere Ausführungsform der erfindungsgemässen Vorrichtung; und

Fig. 3 ein Diagramm, welches den Signalverlauf der erfindungsgemässen Vorrichtung nach Fig. 1 während zwei Entlade/Lade-Zyklen zeigt.

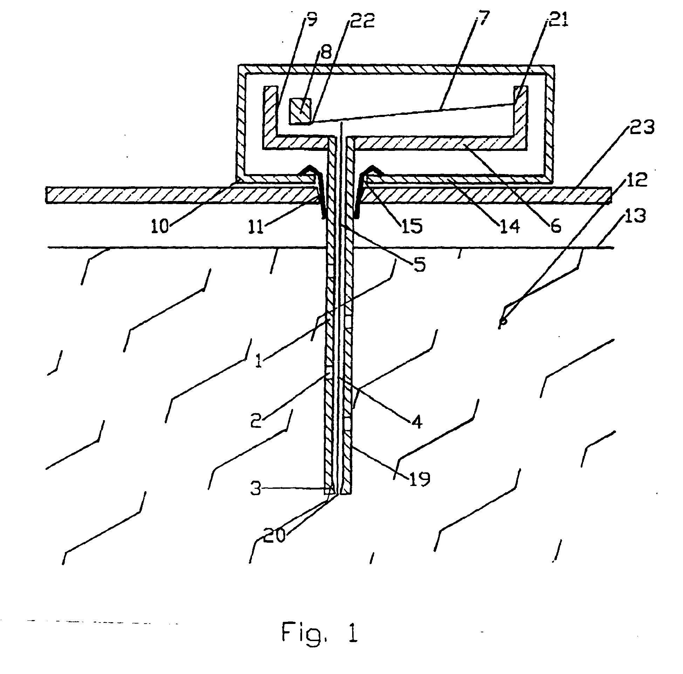

Der schematische Aufbau des Sensors ist in der Fig. 1 zu sehen. In einem dimensionsstabilen Rohr 1, vorzugsweise aus Duranglas, befinden sich in einem festgelegten Abstand Löcher 2, durch die der Austausch von Elektrolyt 12 zwischen Rohrinnerem und Rohräusserem stattfinden kann. Am unteren Ende des Rohres 1 ist eine Verjüngung 3 vorgesehen, in welcher der Ionenaustauscherfaden 4 fixiert ist. Die Länge des Ionenaustauscherfadens 4 ist der späteren Elektrolythöhe angepasst. Typischerweise beträgt die Länge des Körpers 4 zwischen 7 bis 14 cm, vorzugsweise zwischen 9 bis 11 cm. Direkt an der Elektrolytoberfläche 13 geht der Ionenaustauscherfaden 4 in einen dimensionsstabilen Faden 5 aus stabilem Metall, PEEK oder PP über. Dieser dimensionsstabile Faden 5 wird an einem Biegebalken 7 befestigt, der wiederum über einen Arm 6 mit dem Rohr 1 verbunden ist. Aus dem Elektrolyten 12 des Bleiakkumulators nimmt der Ionenaustauscherfaden 4 - der Säurekonzentration entsprechend - Wasser auf und dehnt sich aus und der Biegebalken 7 kann dadurch etwas zurück zu seiner waagerechten Ausgangsposition gelangen.

Zur Messung der Position des Biegebalkens 7 wird vorzugsweise ein System aus einem Magnet 8 und Hallsensor 9 benutzt. Bewegt sich mit dem Biegebalken 7 der Magnet 8 am Hallsensor 9 vorbei, so wird in letzterem eine Änderung des Magnetfeldes gemessen. Ein hermetisch dichtes Gehäuse 10 umschliesst den Biegebalken 7, Magnet 8 und den Hallsensor 9. Im Boden 14 des hermetisch dichten Gehäuses 10 ist eine Durchführung 15 für das Rohr 1 vorgesehen.

Die hermetische dichte Verbindung wird mittels einer als Durchführung 15 ausgebildeten Teflonbuchse, vorzugsweise in der Form einer Hohlniete, hergestellt. Am oberen Ende des Rohres 1 wird eine Hülse 11 aus vorzugsweise PTFE befestigt. Diese Hülse dichtet die Übergangsstelle Gehäuse 10 / Rohr 1 / Gehäusedeckel 23 des Bleiakkumulators gegen internen Überdruck nach aussen. Die erfindungsgemässe Vorrichtung sollte vorzugsweise bis zu 1 bar gegen den Aussendruck dichten, damit sie auch für Gel-Zellen in Frage kommt. Ansonsten kann der Vorteil der Gel-Zellen (Rekombination der Elektrolysegase) nicht ausgeschöpft werden. Hermetisch verschlossen muss die erfindungsgemässe Vorrichtung somit nur bei (wartungsfreien) Gel-Zellen sein.

Bei der Messung von wartungsfreien Bleiakkumulatoren, bei welchen der Elektrolyt in Gelform vorliegt (z.B. durch Aufnahme in Kieselsäuregel) muss verhindert werden, dass die Löcher 2 im Rohr 1 durch Gelpartikel verstopft werden. Zu diesem Zweck kann das Rohr 1 mit einer flüssigkeitsdurchlässigen Folie 19, z.B. in Form eines Polypropylen-Vlieses oder - Netzes oder eines porösen Glasvlieses umgeben werden. Statt der Folie 19 kann auch das Rohr 1 ganz oder teilweise (z.B. statt der Löcher 2) aus einem Glasfiltermaterial bestehen, welches die Schwefelsäure durchlässt, aber die Gelpartikel zurückhält ohne dadurch zu verstopfen.

Das hermetisch dichte Gehäuse 10 kann über ein doppelseitiges Klebeband auf den Deckel des betreffenden Bleiakkumulators geklebt werden.

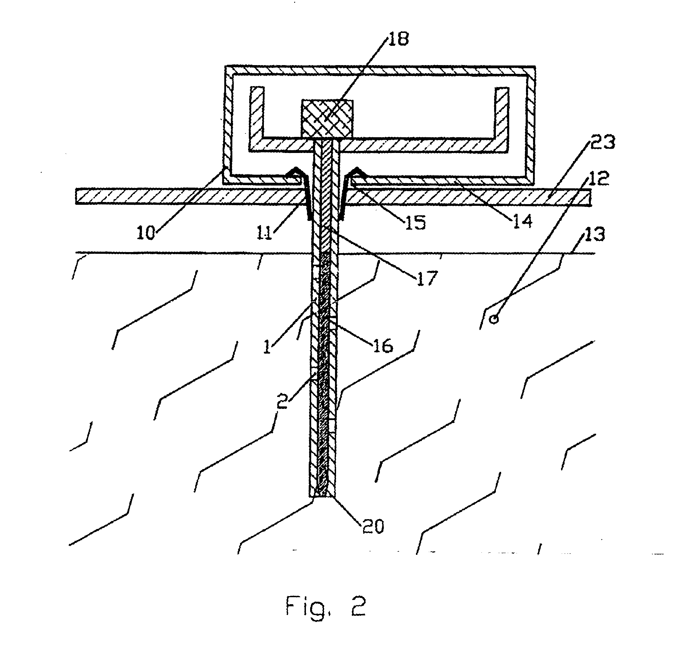

Eine andere Ausgestaltung der Erfindung ist in Fig. 2 dargestellt. Die Ionenaustauschermasse 16 befindet sich in einem dimensionsstabilen Rohr 1, welches Öffnungen 2 in seinem Mantel aufweist. Die Ionenaustauschermasse kann durch Extrusion der -$SO_2$F-Form der Sulfonsäure und anschliessende Hydrolisierung in heisser Schwefelsäure oder heisser Salpetersäure erzeugt werden. Eine andere Möglichkeit ist die Verwendung von fertigen Sulfonsäure-Ionenaustauscherpellets, die mit einem porösen, dimensionsstabilen Träger gegossen werden. Es eigenen sich hierzu Epoxidharze gefüllt mit Füllstoffen, wie Ammoniumcarbonat oder ähnlichen, sublimierenden Feststoffen.

Der obere Teil des Rohres 1 ist mit einem gasdichten Druckvermittler 17, vorzugsweise aus Silikon, PEEK oder PP gefüllt. Am oberen Ende des Rohres 1 schliesst der Druckvermittler 17 direkt an einen Druckaufnehmer 18 an. Der Druckaufnehmer 18 kann ein druckempfindlicher Transistor oder ein anderer dem Fachmann bekannter Druckaufnehmer sein. Ein gasdichtes Gehäuse 10 umschliesst den Druckaufnehmer 18. Im Boden 14 des gasdichten Gehäuses 10 ist eine Durchführung 15 für das Rohr 1 und den Gehäusedeckel 23 des Bleiakkumulators vorgesehen. Am oberen Ende des Rohres 1 wird eine Hülse 11 aus vorzugsweise PTFE befestigt. Diese Hülse 11 dichtet die Übergangsstelle Gehäuse 10 / Rohr 1 / Gehäusedeckel 23 des Bleiakkumulators gegen internen Überdruck nach aussen. Das hermetisch dichte Gehäuse 10 kann über ein doppelseitiges Klebeband auf den Deckel des betreffenden Bleiakkumulators geklebt werden.

Nachstehend wird anhand eines Beispiels die Messung des Ladezustandes von Bleiakkumulatoren mit einer Sulfonsäure (z.B. "Nafion" von DuPont) als Ionenaustauscher im Detail beschrieben.

**Beispiel 1**

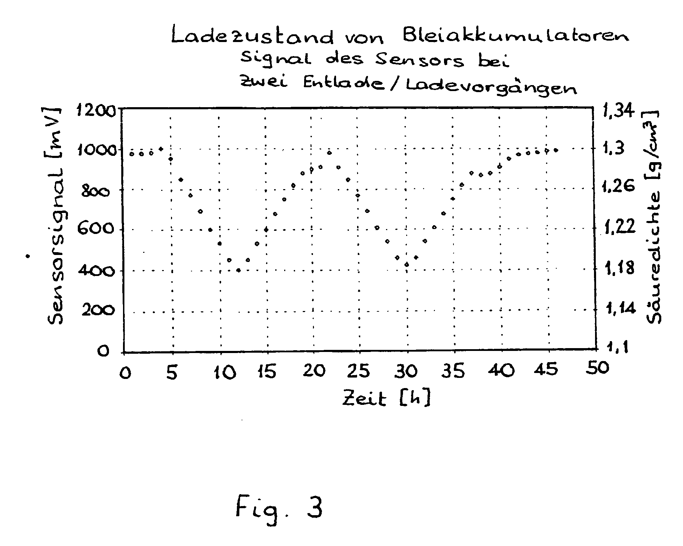

Die Fig. 3 zeigt den Signalverlauf der erfindungsgemässen Vorrichtung gemäss Fig. 1 während zwei Entlade/Lade-Zyklen. Im Diagramm entspricht das in mV gemessene Sensorsignal der Säuredichte des gemessenen Elektrolyten.

Deutlich kann die Variation der Säuredichte über zwei Entlade-/Ladevorgänge beobachtet werden. Der Lade- und EntladeVorgang dauerten je 12 Stunden. Nach der zweiten Ladung wurde noch über 4 Stunden eine Nachladung vorgenommen.

Das Ausgangssignal des Sensors wurde in einer elektrischen Schaltung mit dem Signal eines Temperaturfühlers verknüpft, so dass die Ausdehnung des Ionenaustauschers aufgrund eines Temperatureffekts ermittelt werden konnte. Durch zwei Verstärkerstufen mit zwei regelbaren Widerständen kann der Nullpunkt des Ausgangssignals und dessen Steigung festgelegt werden. Am Ausgang des Säuredichtemessgerätes erhält der Nutzer dann ein analoges Signal von vorzugsweise 1,1 bis 1,3 Volt, entsprechend einem Säuredichtebereich von 1,10 bis 1,30 g/cm$^3$.

Statt der Messung der Säurekonzentration kann mittels der Erfindung auch die Konzentration von Laugen gemessen werden. In alkalischen Brennstoffzellen verändert sich im Betrieb die Konzentration der Kalilauge durch das entstehende Reaktionswasser und die Abdampfverluste. Somit ist bei diesem System nicht bestimmt, wie sich die Konzentration der Lauge mit der Zeit ändert. Daher ist eine Messung der Konzentration der Lauge unerlässlich. Üblicherweise wird das System so eingestellt, dass die Abdampfverluste stets die Menge an entstehendem Reaktionswasser übersteigen. Dann kann über ein Ausgleichsgefäss Wasser nachgefüllt werden. Als Signal zum Auffüllen kann dazu sehr gut die Konzentrationsmessung mit der erfindungsgemässen Vorrichtung benutzt werden. Als Ionenaustauscher wird für die Laugenmessung vorzugsweise ein tertiäres Amin (z.B. Lewatit von Bayer) eingesetzt.

Neben den angeführten Anwendungsmöglichkeiten sind eine Vielzahl von Einsatzmöglichkeiten denkbar. Beispielsweise ist durch Wahl der geeigneten Ionenaustauschermaterialien eine Überwachung der Chloralkali-Elektrolyse denkbar (Natronlaugenkonzentration), oder die Überwachung von Industrieabwässern oder konzentrierten landwirtschaftlichen Abwässern.

Durch die verschiedenen, in der erfindungsgemässen Vorrichtung verwendeten Materialien führen Temperaturänderungen auch zu geometrischen Änderungen im weg- oder druckabhängigen Sensor 7,8,9; 17,18.

Weil sich dadurch die Messgrösse verändert, wird sich auch das Messsignal mit der Temperatur ändern. Weil diese Effekte linear sind - vor allem die thermische Ausdehnung des Ionenaustauschermaterials - lässt sich diese Signaländerung kompensieren. Dazu wird ein Temperatursensor, der ein Spannungssignal analog zur Temperatur ausgibt, benutzt. Über eine geeignete Verstärkerstufe wird dieses Signal dem elektrischen Signal des weg- oder druckabhängigen Sensors 7,8,9;17,18 überlagert, so dass das Gesamtsignal temperaturkompensiert erscheint.

**Patentansprüche**

1. Verfahren zur Messung der Änderung der Säure-, bzw. Basenkonzentration wässeriger Lösungen (12), wobei die Längenänderung eines in der zu messenden, wässerigen Lösung eingetauchten, wasserquell- bzw. schrumpffähigen longitudinal geformten Körpers (4;16) gemessen wird,
**dadurch gekennzeichnet, dass**
die Längenänderung des Körpers (4;16) in ein proportionales, elektrisches Spannungssignal umgewandelt und dieses in Relation zur Säure-, bzw. Basenkonzentration der wässerigen Lösungen (12) gebracht wird.

2. Verfahren, nach Anspruch 1, **dadurch gekennzeichnet, dass** der Körper (4;16) ein Ionenaustauscherharz, vorzugsweise ein Kationenaustauscherharz umfasst.

3. Anwendung des Verfahren nach Anspruch 1 oder 2 zur Messung der Säuredichte und Anzeige des Ladezustandes von Bleiakkumulatoren.

4. Vorrichtung zur Messung der Änderung der Säure-, bzw. Basenkonzentration wässeriger Lösungen (12), mit

A) einem säure-, bzw. laugenbeständigen Rohr (1) mit einem unteren Ende (20), welches zum Eintauchen in die zu messende wässerige Lösung (12) bestimmt ist und mit wasserdurchlässigen Perforationen (2) in seiner Mantelfläche versehen ist; wobei
B) der untere, an das untere Ende (20) anschliessende Teil des Hohlraums des Rohres (1) mit einem einstückig, longitudinal geformten, wasserquell- bzw. schrumpffähigen Körper (4; 16) gefüllt ist, welcher am unteren Ende (20) des Rohres (1) befestigt ist, so dass er nur rohraufwärts ausdehn-, bzw. zusammenziehbar ist; und wobei
C) das freie Ende des Körpers (4;16) mit einem weg- oder druckabhängigen Sensor (7,8,9; 17,18) verbunden ist, der die Längenänderung des Körpers (4;16) in ein proportionales, elektrisches Spannungssignal umwandelt, und
D) gegebenfalls einer Anzeige für das Spannungssignal.

5. Vorrichtung nach Anspruch 4, **dadurch gekennzeichnet, dass** das freie Ende des Körpers (4;16) mittels eines starren Drahtes (5) mit einem wegabhängigen, elektrischen Sensor (7,8,9) verbunden ist, wobei der Sensor (7,8,9) vorzugsweise einen longitudinalen Biegebalken (7) umfasst, welcher an einem seiner Enden (21) relativ zum Rohr (1) fest angeordnet ist und an seinem anderen, freien Ende (22) einen Magneten (8) trägt, wobei das Magnetfeld des Magneten (8) von einem relativ zum Rohr (1) fest angeordneten Hallsensor (9) aufgenommen wird.

6. Vorrichtung nach Anspruch 4, **dadurch gekennzeichnet, dass** das freie Ende des Körpers (4;16) an einen Druckvermittler (17) angrenzt, welcher direkt mit einem Druckmessumformer (18) verbunden ist und wobei der Druckvermittler (17) vorzugsweise aus einem nicht wasserquellenden, bzw. -schrumpfenden, sich linear mit der Temperatur ausdehnenden Material besteht.

7. Vorrichtung nach Anspruch 6, **dadurch gekennzeichnet, dass** der Druckmessumformer (18) auf piezoelektrischen Effekten basiert.

8. Vorrichtung nach einem der Ansprüche 4 bis 7, **dadurch gekennzeichnet, dass** das Rohr (1) aus Duranglas, Polypropylen (PP) oder Polyetheretherketon (PEEK) besteht.

9. Vorrichtung nach einem der Ansprüche 4 bis 8, **dadurch gekennzeichnet, dass** das Rohr (1) am unteren Boden (14) eines Gehäuses (10) befestigt ist, in welchem der weg- oder druckabhängige Sensor (7,8,9; 17,18) untergebracht ist, wobei die Verbindung zwischen Rohr (1) und Gehäuse (10) vorzugsweise gasdicht ausgebildet ist.

10. Bleiakkumulator mit einer Vorrichtung nach einem der Ansprüche 4 bis 9, **dadurch gekennzeichnet, dass** die Vorrichtung derart im Bleiakkumulator positioniert ist, dass die Länge des Körpers (4;16) maximal der Füllhöhe der Schwefelsäure im Bleiakkumulator entspricht.

**Claims**

1. A method for measuring the variation of the concentration of acids or bases in aqueous solutions (12) by measuring the change in length of a water-swelling or water-shrinking longitudinal structure (4; 16) which is dipped into the aqueous solution being tested,
**characterized in that**
the change in length of the structure (4; 16) is converted into a proportional, electric voltage signal in a manner to correspond to the acid or base concentration of the aqueous solutions (12).

2. Method as claimed in claim 1, **characterized in that** the structure (4; 16) includes an ion exchange resin, preferably a cationic exchange resin.

3. Application of the method defined in claims 1 or 2 to measure acid concentration and to display the charge status of lead storage batteries.

4. Apparatus measuring the acid or basic concentration of aqueous solutions (12), comprising

(A) an acid- or lye-resistant tube (1) having a lower end (20) which shall be dipped into the aqueous solution to be tested and which is fitted with water-passing perforations (2) in its outer surface, where
(B) the lower part of the cavity of the tube (1), adjoining the lower end (20), is filled by an integral, longitudinal, water-swelling or water-shrinking structure (4; 16) which is affixed at the lower end of the tube (1) so that said structure only can elongate or shrink in the upward tube direction, and whereby
(C) the free end of the structure (4; 16) is connected to an excursion-dependent or a pressure-dependent sensor (7,8,9; 17, 18) converting the length change of the structure (4; 16) into a proportional electrical voltage signal, and

(D) if called for a voltage signal display.

5. Apparatus as claimed in claim 4, **characterized in that** the free end of the structure (4; 16) is connected by a rigid wire (5) to an excursion-dependent electric sensor (7, 8, 9) preferably including a longitudinal bending beam (7) affixed firmly in place at one of its ends (21) relative to the tube (1) and bearing a magnet (8) at its other, free end (22), the magnetic field from the magnet (9) being picked up by a Hall detector (9) which is firmly affixed in place relative to the tube (1)

6. Apparatus as claimed in claim 4, **characterized in that** the free end of the structure (4; 16) adjoins a pressure transmitting element (17) directly connected to a pressure transducer (18), said pressure transmitting element (17) preferably consisting of a non water-swelling or a non water-shrinking material elongating linearly with temperature.

7. Apparatus as claimed in claim 6, **characterized in that** the pressure transformer (18) is based on piezoelectric effects.

8. Apparatus as claimed in one of claims 4 through 7, **characterized in that** the tube (1) is made of Duran glass, polypropylene (PP) or polyether etherketone (PEEK).

9. Apparatus as claimed in one of claims 4 through 8, **characterized in** the tube (1) is affixed to the lower base (14) of a housing (10) receiving the excursion-dependent or the pressure-dependent sensor (7, 8, 9; 17, 18), the connection between the tube (1) and the housing (10) preferably being hermetic.

10. A lead storage battery fitted with an apparatus as claimed in one of claims 4 through 8, **characterized in that** said apparatus is configured in the lead storage battery in a manner that the length of the structure (4; 16) at most corresponds to the filling height of the sulfuric acid in said storage battery.

## Revendications

1. Procédé de mesure de la modification de la concentration en acides ou en bases de solutions aqueuses (12), dans lequel la modification de la longueur d'un corps de forme allongée (4 ; 16) rétrécissable ou gonflable dans l'eau, immergé dans la solution à mesurer, est mesurée, **caractérisé en ce que** :

la modification de la longueur du corps (4 ; 16) est transformée en un signal de tension électrique proportionnelle et celui-ci est corrélé à la concentration en acides ou à la concentration en bases des solutions aqueuses (12).

2. Procédé selon la revendication 1, **caractérisé en ce que** le corps (4 ; 16) comprend une résine échangeuse d'ions, de préférence une résine échangeuse de cations.

3. Utilisation du procédé selon la revendication 1 ou 2 pour la mesure de la densité d'acide et l'indication de l'état de charge d'accumulateurs au plomb.

4. Dispositif de mesure de la modification de la concentration en acides ou en bases de solutions aqueuses (12), comprenant :

A) un tube (1) résistant aux acides ou aux bases présentant une extrémité inférieure (20), laquelle est destinée à être immergée dans la solution aqueuse (12) à mesurer, et des perforations perméables à l'eau (2) dans sa surface d'enveloppe ; dans lequel
B) la partie inférieure adjacente à l'extrémité inférieure (20) de l'espace creux du tube (1) est remplie d'un corps de forme allongée monobloc, rétrécissable ou gonflable dans l'eau (4 ; 16), qui est fixé à l'extrémité inférieure (20) du tube (1), si bien qu'il n'est gonflable ou rétrécissable que dans le sens ascendant du tube ; et dans lequel
C) l'extrémité libre du corps (4 ; 16) est reliée à un capteur asservi à la course ou à la pression (7, 8, 9 ; 17, 18) qui transforme la modification de la longueur du corps (4 ; 16) en un signal de tension électrique proportionnelle, et
D) éventuellement un dispositif d'affichage pour le signal de tension.

5. Dispositif selon la revendication 4, **caractérisé en ce que** l'extrémité libre du corps (4 ; 16) est reliée à un capteur électrique (7, 8, 9) asservi à la course par l'intermédiaire d'un fil rigide (5), dans lequel le capteur (7, 8, 9) comprend de préférence un barreau allongé flexible (7), lequel barreau est disposé par rapport au tube (1) de manière fixe par l'intermédiaire de l'une de ses extrémités (21) et porte un aimant (8) sur son autre extrémité libre (22), le champ magnétique de l'aimant (8) étant détecté par un capteur à effet Hall (9) disposé de manière fixe sur le tube (1).

6. Dispositif selon la revendication 4, **caractérisé en ce que** l'extrémité libre du corps (4 ; 16) est adjacente à un transmetteur de pression (17), lequel est relié directement à un convertisseur de mesure de pression (18), et dans lequel le transmetteur de pression (17) est de préférence composé d'un matériau non rétrécissable ou non gonflable dans l'eau, se dilatant ou rétrécissant linéairement en fonction de la température.

**7.** Dispositif selon la revendication 6, **caractérisé en ce que** le convertisseur de mesure de pression (18) est basé sur des effets piézo-électriques.

**8.** Dispositif selon l'une quelconque des revendications 4 à 7, **caractérisé en ce que** le tube (1) est composé de verre Duran, de polypropylène (PP) ou de polyétheréthercétone (PEEK).

**9.** Dispositif selon l'une quelconque des revendications 4 à 8, **caractérisé en ce que** le tube (1) est fixé à la face inférieure (14) d'un boîtier (10) dans lequel est logé le capteur asservi à la course ou à la pression (7, 8, 9 ; 17, 18), la jonction entre le tube (1) et le boîtier (10) étant de préférence réalisée de manière étanche aux gaz.

**10.** Accumulateur au plomb comprenant un dispositif selon l'une quelconque des revendications 4 à 9, **caractérisé en ce que** le dispositif est placé dans l'accumulateur au plomb de sorte que la longueur du corps (4 ; 16) corresponde au maximum à la hauteur de remplissage d'acide sulfurique dans l'accumulateur au plomb.

Fig. 1

Fig. 2

Ladezustand von Bleiakkumulatoren
Signal des Sensors bei
zwei Entlade / Ladevorgängen

Fig. 3